# EUROPÄISCHE PATENTSCHRIFT

(11) **EP 3 948 198 B1**
(45) Veröffentlichungstag und Bekanntmachung des Hinweises auf die Patenterteilung: **08.03.2023**
(21) Anmeldenummer: 20717125.7
(22) Anmeldetag: 31.03.2020
(51) Int. Cl.: G01B 7/14, G01L 3/10, G01L 3/14, G01L 5/22, B62D 6/10

(54) **DREHMOMENTSENSOR MIT INDUKTIV GEKOPPELTEN, INEINANDERGREIFENDEN BAUTEILEN**
TORQUE SENSOR HAVING INDUCTIVELY COUPLED, INTERMESHING COMPONENTS
CAPTEUR DE COUPLE AVEC COMPOSANTS COUPLÉS INDUCTIVEMENT QUI S'ENGRÈNENT MUTUELLEMENT

(30) Priorität: 02.04.2019 DE 102019108516
(43) Veröffentlichungstag der Anmeldung: 09.02.2022
(73) Patentinhaber: thyssenkrupp Presta AG, 9492 Eschen (LI); thyssenkrupp AG, 45143 Essen (DE)
(72) Erfinder: BARANYAI, Zoltán, 2053 Herceghalom (HU); DALOKI, Gergely, 1204 Budapest (HU); FEKETE, Laszlo, 8196 Liter (HU); RACZ, Gergely, 1115 Budapest (HU); KOVACS, Adorjan, 1165 Budapest (HU)
(74) Vertreter: thyssenkrupp Intellectual Property GmbH
(86) Internationale Anmeldenummer: PCT/EP2020/059077
(87) Internationale Veröffentlichungsnummer: WO 2020/201262

(56) Entgegenhaltungen:
- DE-A1-102007 058 657
- US-A1- 2004 112 146
- US-A1- 2010 289 485

## Beschreibung

Die vorliegende Erfindung betrifft einen Drehmomentsensor mit den Merkmalen des Oberbegriffs des Anspruchs 1, insbesondere für eine elektromechanische Hilfskraftlenkung eines Kraftfahrzeuges.

Drehmomentsensoren weisen herkömmlicherweise einen Drehwinkelsensor auf. Hierbei werden zwei gegeneinander begrenzt verdrehbare Wellenteile über eine Torsionsfeder elastisch miteinander gekoppelt. Wenn ein Wellenteil durch ein vom Fahrer des Fahrzeugs aufgewendetes Drehmoment gegen den anderen Wellenteil verdreht wird, ist der relative Drehwinkel im Wesentlichen proportional zum eingeleiteten Drehmoment. Für eine genaue Bestimmung des Drehmoments ist es wichtig, den Drehwinkel präzise messen zu können. Herkömmlicherweise wird die Verdrehung der Wellenteile gegeneinander durch Messung der Drehwinkel der Wellenteile gegenüber einem ortsfesten Sensorgehäuse bestimmt. Die mechanische Bewegung zwischen Wellenteilen und Gehäuse ist dabei groß und begrenzt letztendlich die Genauigkeit des Sensors.

Es werden üblicherweise magnetflussbasierte Sensoren verwendet, die weniger empfindlich auf diese Fehlausrichtung reagieren, aber auch weniger genau sind.

Aus dem Stand der Technik, beispielsweise aus den Offenlegungsschriften DE 29 51 148 A1 und DE 10 2009 021 191 A1 ist es bekannt, zur berührungsfreien Erfassung eines Drehwinkel und/oder eines Drehmomentes induktive Winkelsensoren einzusetzen, die eine hohe Genauigkeit aufweisen. Ein weiterer Drehmomentsensor bestehend aus zwei übereinander angeordneten und magnetisch gekoppelten Bauelementen ist aus der Schrift US2004/0112146 A1 bekannt.

Es ist eine Aufgabe der vorliegenden Erfindung, einen Drehmomentsensor vorzuschlagen, der eine erhöhte Genauigkeit und einen verringerten Einfluss eines vorhandenen magnetischen Störfeldes auf die Ermittlung des Drehmomentwertes aufweist.

Diese Aufgabe wird von einem Drehmomentsensor mit den Merkmalen des Anspruchs 1 gelöst. Vorteilhafte Weiterbildungen ergeben sich aus den Unteransprüchen.

Demnach ist ein Drehmomentsensor zur Messung eines in eine obere Welle eingeleiteten Drehmomentes, wobei die um eine Längsachse drehbare obere Welle mit einer unteren Welle über einen Drehstab verbindbar ist, vorgesehen. Der Drehmomentsensor weist zwei in Längs-richtung der Längsachse ineinandergreifende Bauteile auf, wobei ein erstes Bauteil mit der oberen Welle verbindbar ist und ein zweites Bauteil mit der unteren Welle verbindbar ist, und wobei die Bauteile in Längsrichtung hervorragende Flächen aufweisen, wobei sich die Flächen eines Bauteils mit zugeordneten Flächen des anderen Bauteils zumindest teilweise in Längs-richtung überdecken, und wobei der Drehmomentsensor wenigstens ein Sensorpaar aufweist, wobei ein Sensorpaar eine an einer der in Längsrichtung hervorragenden Flächen eines Bauteils angeordnete Sensorspule, die ein hochfrequentes magnetisches Wechselfeld erzeugen kann, und ein an einer der in Längsrichtung hervorragenden Flächen des anderen Bauteils angeordnetes metallisches Element aufweist, und wobei ein in die obere Welle eingeleitetes Drehmoment eine Änderung des Abstandes zwischen Sensor-spule und metallischem Element bewirkt, wobei der Drehmomentsensor eine Einrichtung umfasst, die dazu eingerichtet ist, eine durch die Änderung des Abstandes hervorgerufene Frequenzänderung des magnetischen Wechselfelds zu messen und daraus das in die obere Welle eingeleitete Drehmoment zu bestimmen. Bevorzugt sind zwei Sensorpaare vorgesehen. Der induktive Drehmomentsensor weist damit eine verringerte Anfälligkeit der Messung für Streufelder sowie mechanische Toleranzen auf. Um die Redundanz zu erhöhen, können mehr als zwei Sensorpaare vorgesehen sein.

Vorzugsweise weist jedes der beiden Bauteile wenigstens zwei Flächen auf, wobei auf einer ersten Fläche eine Sensorspule und auf einer zweiten Fläche ein metallisches Element angeordnet ist und wobei die Sensorspule und das metallische Element voneinander wegweisen. Es kann aber auch vorgesehen sein, dass eines der Bauteile ausschließlich die Sensorspulen und das andere Bauteil ausschließlich die metallischen Elemente trägt, so dass nur das Bauteil mit den Sensorspulen eine Stromversorgung benötigt. Durch das Vorhandensein der wenigstens zwei Flächen pro Bauteil kann auch die Richtung des Drehmomentes bestimmt werden, da sich der Abstand der Elemente eines Sensorpaares verringert, während sich der Abstand der Elemente des anderen Sensorpaares vergrößert und umgekehrt.

Damit das Signal ausreichend stark ist, ist es vorteilhaft, wenn die Sensorspule eines Bauteils und das metallische Element des anderen Bauteils zueinander weisend ausgerichtet sind und in unmittelbarem Abstand zueinander liegen.

Vorzugsweise umgeben die Bauteile die jeweilige Welle konzentrisch und sind im Wesentlichen zylindrisch ausgestaltet.

In einer Ausführungsform weisen die Bauteile eine kreisförmige Grundplatte auf, von der wenigstens ein Vorsprung hervorragt, der sich über einen Kreissektor erstreckt und der die besagten Flächen an seitlichen Stirnflächen ausbildet, die sich in Längsrichtung und entlang des Radius erstrecken. Vorzugsweise sind die besagten Flächen plan.

Es sind bevorzugt zwei Vorsprünge pro Bauteil vorgesehen, die gleich ausgestaltet sind und entlang des Umfangs um die Längsachse symmetrisch auf einer gemeinsamen Seite der Grundplatte liegend angeordnet sind.

Die beiden Bauteile sind vorteilhafterweise identisch ausgebildet.

Die für die Frequenzmessung benötigte Elektronik ist bevorzugt auf der Oberfläche der Grundplatte eines Spulen tragenden Bauteils angeordnet.

Da die Bauteile sich mit den Wellen drehen, erfolgt die Stromversorgung und die Übertragung der Messsignale der Sensorpaare vorzugsweise kabellos. Dabei ist es vorteilhaft, wenn auf der vorsprungsfernen Oberfläche bzw. Stirnseite der Grundplatte des Spulen tragenden Bauteils eine WPT-Spule (Wireless Power Transfer) angeordnet ist, die dazu eingerichtet ist, elektrische Energie induktiv von einer mit einem Sensorgehäuse verbundenen Primärspule zu empfangen.

Vorzugsweise sind auf der Umfangsfläche der Grundplatte des Spulen tragenden Bauteils Signalkopplungsspulen angeordnet, die dazu eingerichtet sind, die Ausgangssignale der Sensorpaare auf eine Sekundärspule, die an dem ortsfesten Sensorgehäuse angebracht ist, zu übertragen.

Weiterhin ist eine elektromechanische Hilfskraftlenkung für ein Kraftfahrzeug vorgesehen, umfassend eine mit einem Lenkrad verbundene obere Welle und eine mit der oberen Welle über einen Drehstab verbundene untere Welle, einen zuvor beschriebenen Drehmomentsensor und einen Elektromotor zur Unterstützung einer in das Lenkrad von einem Fahrer eingebrachten Lenkbewegung in Abhängigkeit des von dem Drehmomentsensor gemessenen Drehmomentes.

Eine bevorzugte Ausführungsform der Erfindung wird nachfolgend anhand der Zeichnungen näher erläutert. Gleiche bzw. funktionsgleiche Bauteile sind dabei in den Figuren mit denselben Bezugszeichen versehen. Es zeigen:
- Fig. 1:: eine schematische Darstellung einer elektromechanischen Hilfskraftlenkung,
- Fig. 2:: einen Längsschnitt durch einen Drehmomentsensor,
- Fig. 3:: eine räumliche Ansicht der beiden Bauteile des Drehmomentsensors,
- Fig. 4:: einen Längsschnitt durch einen Drehmomentsensor mit einseitig angeordneter Elektronik,
- Fig. 5:: einen Längsschnitt durch einen Drehmomentsensor mit einseitig angeordneter Elektronik mit konzentrisch angeordneten WPT-Spulen.

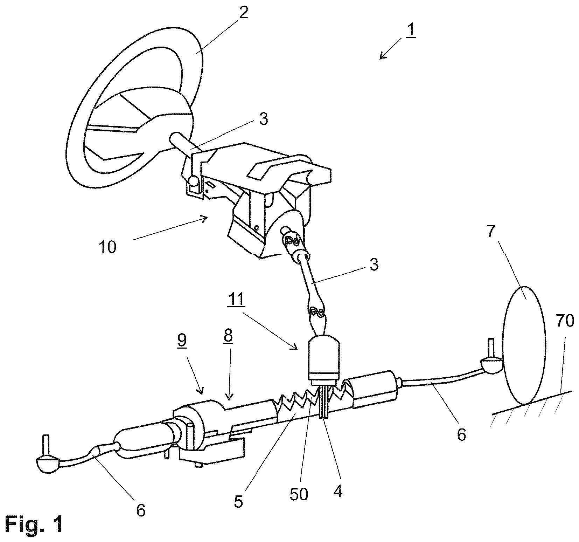

In der Figur 1 ist eine elektromechanische Kraftfahrzeugservolenkung 1 mit einem Lenkrad 2, das mit einer oberen Welle 3 drehfest gekoppelt ist, schematisch dargestellt. Über das Lenkrad 2 bringt der Fahrer ein entsprechendes Drehmoment als Lenkbefehl in die oberen Welle 3 ein. Das Drehmoment wird dann über die oberen Welle 3 und eine untere Welle 30 auf ein Lenkritzel 4 übertragen. Das Ritzel 4 kämmt in bekannter Weise mit einem Zahnsegment 50 einer Zahnstange 5. Das Lenkritzel 4 bildet zusammen mit der Zahnstange 5 ein Lenkgetriebe. Die Zahnstange 5 ist an ihren freien Enden mit Spurstangen 6 über nicht dargestellte Kugelgelenke verbunden. Die Spurstangen 6 selbst sind in bekannter Weise über Achsschenkel mit je einem gelenkten Rad 7 des Kraftfahrzeugs verbunden. Eine Drehung des Lenkrades 2 führt über die Verbindung der Lenkwellen 3,30 und des Ritzels 4 zu einer Längsverschiebung der Zahnstange 5 und damit zu einer Verschwenkung der gelenkten Räder 7. Die gelenkten Räder 7 erfahren über eine Fahrbahn 70 eine Rückwirkung, die der Lenkbewegung entgegen wirkt. Zum Verschwenken der Räder 7 ist folglich eine Kraft erforderlich, die ein entsprechendes Drehmoment am Lenkrad 2 erforderlich macht. Ein Elektromotor 8 einer Servoeinheit 9 ist vorgesehen, um dem Fahrer bei dieser Lenkbewegung zu unterstützen. Die Servoeinheit 9 kann dabei als Hilfskraftunterstützungseinrichtung 9, 10, 11 entweder mit einer Lenkwelle 3, dem Lenkritzel 4 oder der Zahnstange 5 gekoppelt sein. Die jeweilige Hilfskraftunterstützung 9,10,11 trägt ein Hilfskraftmoment in die Lenkwelle 3, das Lenkritzel 4 und/oder in die Zahnstange 5 ein, wodurch der Fahrer bei der Lenkarbeit unterstützt wird. Die drei unterschiedlichen in Figur 1 dargestellten Hilfskraftunterstützungen 9,10,11 zeigen alternative Positionen für deren Anordnung. Üblicherweise ist nur eine einzige der gezeigten Positionen mit einer Hilfskraftunterstützung belegt. Die Servoeinheit kann dabei als Überlagerungslenkung an der Lenksäule oder als Hilfskraftunterstützungseinrichtung an dem Ritzel 4 oder der Zahnstange 5 angeordnet sein.

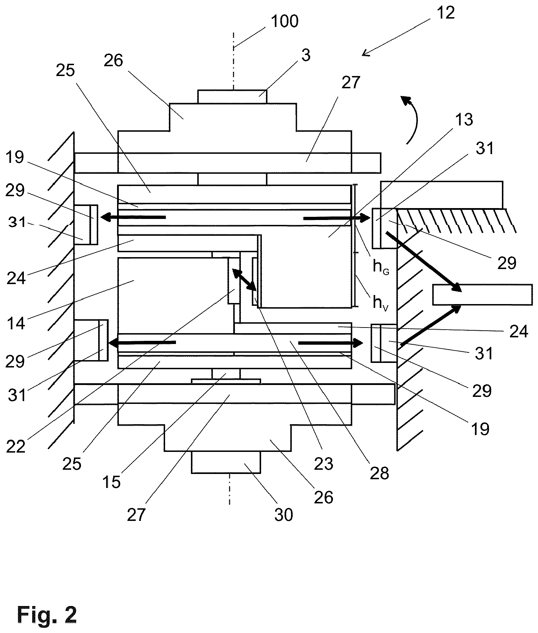

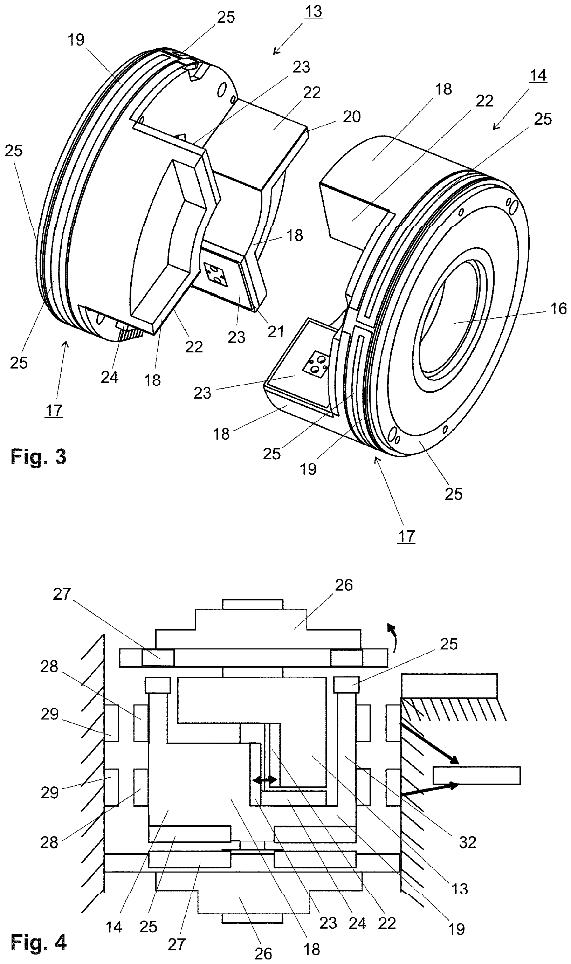

Die Figuren 2 und 3 zeigen einen Drehmomentsensor 12 der in Figur 1 dargestellten elektromechanischen Kraftfahrzeugservolenkung, der zwei zylinderförmige ineinandergreifende Bauteile 13,14 aufweist. Die obere Welle 3 ist mit der unteren Welle 30 über einen Drehstab 15 verbunden. Ein erstes Bauteil 13 ist mit der oberen Welle 3 und ein zweites Bauteil 14 ist mit der unteren Welle 30 drehfest verbunden. Die beiden Bauteile 13,14 sind an in Längsrichtung gegenüberliegenden Enden des Drehstabes 15 mit den entsprechenden Wellen 3,30 verbunden. Die Bauteile 13,14 umgeben die zugeordnete Welle 3,30 konzentrisch. Sie weisen eine, vorzugsweise an die äußere Form der Welle angepasste Aussparung 16 auf, die zur Befestigung der Bauteile 13,14 an der zugeordneten Welle dient. Die beiden Bauteile 13,14 sind baugleich. Sie weisen eine Grundplatte 17 auf, die sich rotationssymmetrisch um die Längsachse der Wellen 100 erstreckt und von der in Längsrichtung, zur gleichen Seite zwei Vorsprünge 18 hervorragen. Die Vorsprünge 18 sind in Umfangsrichtung um die Längsachse 100 gleichmäßig beabstandet angeordnet und erstrecken sich entlang des Radius, von der Aussparung 16 bis zur Umfangsseite der Grundplatte 19. Die Vorsprünge 18 nehmen jeweils bevorzugt einen Kreissektor von weniger als 90° ein. Die Vorsprünge 18 können gleich ausgeformt sein. An ihren beiden Enden in Umfangsrichtung weisen die Vorsprünge 18 jeweils ebene Flächen 20,21 (Stirnflächen) auf, die sich entlang des Radius, über die gesamte Höhe der Vorsprünge hv erstrecken. Auf einer der beiden planen Flächen 20 eines jeweiligen Vorsprungs ist dabei ein metallisches Element 22, insbesondere ein leitfähiges Material, das eine leitfähige Sensorfläche ausbildet, angeordnet, auf der anderen planen Fläche 21 eine Sensorspule 23. Jedes Bauteil 13,14 weist somit zwei Sensorspulen 23 und zwei leitfähige Sensorflächen 22 auf. Dabei liegen sich in Umfangsrichtung jeweils eine leitfähige Sensorfläche 22 eines der Vorsprünge 18 und eine Sensorspule 23 des anderen Vorsprungs 18 eines einzigen Bauteils 13,14 beabstandet gegenüber. Die Bauteile 13,14 greifen im Montagezustand ineinander. Dabei sind die Vorsprünge 18 des ersten Bauteils 13 in Umfangsrichtung zwischen den Vorsprüngen 18 des zweiten Bauteils 14 angeordnet, so dass eine Sensorspule 23 des ersten Bauteils mit einer leitfähigen Sensorflächen 22 des zweiten Bauteils 14 und vice versa direkt in Umfangsrichtung gegenüberliegend und zueinander schauend angeordnet sind. Jeweils eine leitfähige Sensorfläche 22 und eine dazu in unmittelbarer Nähe angeordnete Sensorspule 23 bilden ein Sensorpaar aus, so dass insgesamt vier solcher Sensorpaare vorhanden sind. Die Überdeckung einer Sensorspule 23 mit einer leitfähigen Sensorfläche 22 eines Sensorpaares in Längsrichtung 100 ist jeweils bevorzugt mindestens 80%.

Die beiden Bauteile 13,14 sind an den beiden Enden des Drehstabes an der oberen und unteren Welle 3,30 befestigt, so dass bei steigendem Drehmoment die Bauteile 13,14 sich gegeneinander verdrehen, wobei der Abstand zwischen der leitfähige Sensorfläche 22 und Sensorspule 23 zweier Sensorpaare größer und der Abstand zwischen leitfähiger Sensorfläche 22 und Sensorspule 23 der beiden anderen Sensorpaare kleiner wird. Wenn die leitfähige Sensorfläche 22 näher an der Sensorspule 23 liegt, nimmt die Induktivität der Sensorspule ab. Das Magnetfeld der Sensorspule 23 induziert Wirbelströme in der leitfähigen Sensorfläche 22, und diese Ströme bildet ein eigenes Magnetfeld, das das Feld der Sensorspule 23 schwächt, wodurch die gegenseitige Induktivität abnimmt. Wenn die leitfähige Sensorfläche 22 sich hingegen weiter von der Sensorspule 23 entfernt ist, steigt die Induktivität. Die Sensorpaare bilden einen induktiven Sensor aus, der bevorzugt drei Hauptelemente aufweist- einen Oszillator, der ein von allein schwingendes System ist, eine Frequenzmesseinheit, die die Daten sowohl vergleicht als auch auswertet und eine Ausgabeeinheit, die die Werte in ein elektrisches Signal umwandelt. Im Betrieb erzeugen die induktiven Sensoren mit Hilfe der Sensorspule ein magnetisches, hochfrequentes Wechselfeld. Dadurch dass induzierte Wirbelströme hervorgerufen werden, wird eine Veränderung der Impedanz der Sensorspule bewirkt. Diese Impedanz wirkt dem Magnetfeld entgegen und wird elektronisch in ein Schaltsignal umgewandelt. Bewegt sich ein metallisches Objekt (leitfähige Sensorfläche) in dem entstandenen Magnetfeld, wird ein Wirbelstrom in dem Objekt induziert, was dem Magnetfeld entgegenwirkt und somit Energie entzieht. Die durch eine sich ändernde Induktivität entstehende Frequenzänderung wird mit einer Sensoreinheit basierend auf einem Referenzoszillator gemessen.

Die Sensorspule ist daher bevorzugt in einem Parallelschwingkreis mit einem Loopback-Wechselrichter angeordnet, dessen Ausgangssignal eine rechteckige Form hat. Die Sensorspulenanregung ist dabei vorzugsweise sinusförmig und ermöglicht ein besseres Frequenzdesign im Hinblick auf das Multiplexen mehrerer Kanäle. Die Frequenz dieses Signals ist die Resonanzfrequenz der parallelen LC-Schwingkreis.

Die Bewegung der beiden Bauteile 13,14 des Drehmomentsensors zueinander ermöglicht eine einfache Abstandsmessung in differentieller Form, was eine robuste Messung darstellt und eine direkte Messung des Drehmomentes erlaubt. Dabei werden bevorzugt alle vier Sensorpaare für die Messung ausgewertet.

Die für die Frequenzmessung benötigte Elektronik 24 sitzt auf der Oberfläche der Grundplatte 19. Da die Bauteile 13,14 mit einer Lenkbewegung rotieren, erfolgt die Stromversorgung und die Übertragung der Messsignale kabellos. Auf der Grundplatte 19 ist daher auf der vorsprungsfernen Stirnfläche jeweils eine WPT-Spule (Sekundärspule) 25 vorgesehen, die elektrische Energie induktiv und somit berührungslos von einer mit dem Sensorgehäuse 26 verbundenen Primärspule 27 empfängt und somit die Elektronik des zugeordneten Bauteils mit Strom versorgt.

Die Umfangsfläche der Grundplatte 19 trägt Signalkopplungsspulen (Primärspulen) 28 zur Übertragung der Ausgangssignale der Sensorpaare von dem entsprechenden Bauteil 13,14 auf eine Sekundärspule 29, die an dem ortsfesten Sensorgehäuse 26 angebracht ist. Die Verbindung erfolgt bevorzugt über eine serielle Schnittstelle, insbesondere mittels UART auf der Bauteilseite und RX-Empfangseinheit 31 auf der Sekundärspulenseite.

In einem anderen Ausführungsbeispiel kann vorgesehen sein, dass die Signal- und Stromübertragung über eine einzige gemeinsame Spule erfolgt. Es kann allgemein auch vorgesehen sein, dass die kabellose Übertragung der Ausgangssignale mittels kapazitiven Elementen erfolgt.

Figur 4 zeigte ein Ausführungsbeispiel bei dem die Sensorspulen 23 auf einem ersten der beiden Bauteilen 14 und die leitfähigen Sensorflächen 22 auf dem zweiten Bauteil 13 angeordnet sind. Das erste Bauteil 14 stellt somit ein aktives Element dar, das eine Stromversorgung benötigt und das zweite Bauteil 13 ein passives Element, das keine Stromversorgung benötigt. Die für die Frequenzmessung benötigte Elektronik 24 sitzt auf der Oberfläche der Grundplatte 19 des ersten Bauteils 14. Die Stromversorgung des ersten Bauteils 14 erfolgt mittels zweier WPT-Spulen (Sekundärspulen) 25. Das erste Bauteil 14 ist bevorzugt topfförmig ausgebildet und der in den anderen Ausführungsbeispielen beschriebe Vorsprung 18 sitzt im Inneren eines Mantels 32 auf der Grundplatte 19. Das zweite Bauteil 13 ist dabei so wie zuvor beschrieben ausgestaltet. Es ist umfangsseitig vollständig von dem ersten Bauteil 14 umgeben. Eine erste WPT-Spule 25 ist auf der Stirnseite der Mantelfläche 32 des ersten Bauteils 14 angeordnet und eine zweite WPT-Spule 25 ist auf der Stirnseite des Bodens angeordnet. Die WPT-Spulen 25 empfangen entsprechend von zwei mit dem Sensorgehäuse 26 verbundenen und den WPT-Spulen 25 zugeordneten Primärspulen 27 Strom und können somit die Elektronik des ersten Bauteils mit Strom versorgen.

Die Umfangsfläche des Mantels 32 des ersten Bauteils 14 trägt zwei Signalkopplungsspulen (Primärspulen) 28 zur Übertragung der Ausgangssignale der Sensorpaare von dem ersten Bauteil 14 auf jeweils eine Sekundärspule 29, die an dem ortsfesten Sensorgehäuse 26 angebracht ist.

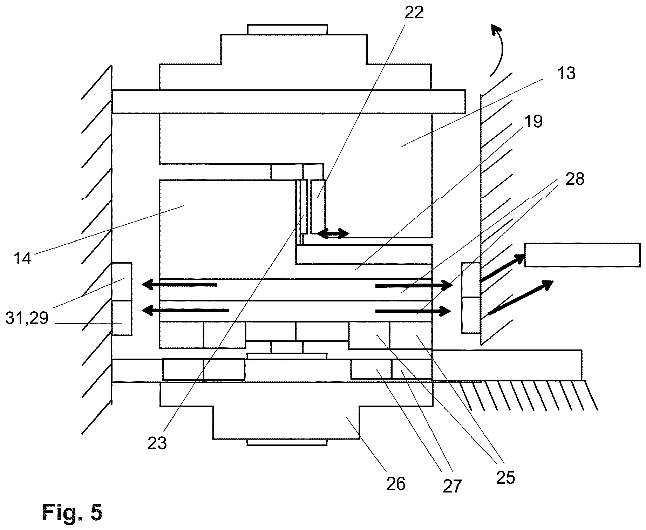

Figur 5 zeigt eine weitere Ausführungsform bei dem die Sensorspulen 23 auf einem ersten der beiden Bauteilen 14 und die leitfähigen Sensorflächen 22 auf dem zweiten Bauteil 13 angeordnet sind. Im Gegensatz zum vorherigen Beispiel weisen die beiden Bauteile 13,14 im Wesentlichen dieselbe Geometrie auf. Die Stromversorgung des ersten Bauteils 14 erfolgt mittels zweier WPT-Spulen (Sekundärspulen) 25, die auf der vorsprungsfernen, außenliegenden Stirnfläche des ersten Bauteils in einer konzentrischen Anordnung angeordnet sind. Die WPT-Spulen 25 empfangen von zwei mit dem Sensorgehäuse 26 verbundenen und ebenfalls konzentrisch angeordneten Primärspulen 27 Strom und können somit die Elektronik des ersten Bauteils 14 mit Strom versorgen.

Die Umfangsfläche der Grundplatte 19 des ersten Bauteils 14 trägt zwei Signalkopplungsspulen (Primärspulen) 28 zur Übertragung der Ausgangssignale der Sensorpaare von dem ersten Bauteil 13 auf zwei Sekundärspulen 29, die an dem ortsfesten Sensorgehäuse 26 angebracht ist. Die Verbindung erfolgt bevorzugt über eine serielle Schnittstelle, insbesondere mittels RX-Empfangseinheiten 31 auf der Sekundärspulenseite.

Die in den Figuren dargestellten Ausführungsformen umfassen insgesamt vier Sensorpaare. Das Prinzip ist aber im Allgemeinen auch auf das Vorliegen von mindestens zwei Sensorpaaren anwendbar. Je mehr Sensorpaare vorgesehen sind, desto höher ist die Auflösung der Drehmomentmessung.

## Patentansprüche

1. Drehmomentsensor (12) zur Messung eines in eine obere Welle (3) eingeleiteten Drehmomentes, wobei die um eine Längsachse (100) drehbare obere Welle (3) mit einer unteren Welle (30) über einen Drehstab (12) verbindbar ist, **dadurch gekennzeichnet, dass** der Drehmomentsensor (12) zwei in Längsrichtung der Längsachse (100) ineinandergreifende Bauteile aufweist, wobei ein erstes Bauteil (13) mit der oberen Welle (3) verbindbar ist und ein zweites Bauteil (14) mit der unteren Welle (30) verbindbar ist, und wobei die Bauteile (13,14) in Längsrichtung hervorragende Flächen aufweisen, wobei sich die Flächen eines Bauteils (13,14) mit zugeordneten Flächen des anderen Bauteils (13,14) zumindest teilweise in Längsrichtung überdecken, und wobei der Drehmomentsensor wenigstens ein Sensorpaar aufweist, wobei ein Sensorpaar eine an einer der in Längsrichtung hervorragenden Flächen eines Bauteil (13,14) angeordnete Sensorspule (23), die ein hochfrequentes magnetisches Wechselfeld erzeugen kann, und ein an einer der in Längsrichtung hervorragenden Flächen des anderen Bauteils (13,14) angeordnetes metallisches Element (22) aufweist, und wobei ein in die obere Welle (3) eingeleitetes Drehmoment eine Änderung des Abstandes zwischen Sensorspule (23) und metallischem Element (22) bewirkt, wobei der Drehmomentsensor eine Einrichtung umfasst, die dazu eingerichtet ist, eine durch die Änderung des Abstandes hervorgerufene Frequenzänderung des magnetischen Wechselfelds zu messen und daraus das in die obere Welle (3) eingeleitete Drehmoment zu bestimmen.

2. Drehmomentsensor nach Anspruch 1, **dadurch gekennzeichnet, dass** jedes der beiden Bauteile (13,14) wenigstens zwei Flächen aufweist, wobei auf einer ersten Fläche eine Sensorspule (23) und auf einer zweiten Fläche ein metallisches Element (22) angeordnet ist und wobei die Sensorspule (23) und das metallische Element (22) voneinander wegweisen.

3. Drehmomentsensor nach Anspruch 2, **dadurch gekennzeichnet, dass** die Sensorspule (23) eines Bauteils (13,14) und das metallische Element (22) des anderen Bauteils (13,14) und vice versa, zueinander weisend ausgerichtet sind und in unmittelbarem Abstand zueinander liegen.

4. Drehmomentsensor nach einem der vorhergehenden Ansprüche, **dadurch gekennzeichnet, dass** die Bauteile (13,14) die jeweilige Welle (3,30) konzentrisch umgeben und im Wesentlichen zylindrisch ausgestaltet sind.

5. Drehmomentsensor nach einem der vorhergehenden Ansprüche, **dadurch gekennzeichnet, dass** die Bauteile (13,14) eine kreisförmige Grundplatte (19) aufweisen, von der wenigstens ein Vorsprung (18) hervorragt, der sich über einen Kreissektor erstreckt und der die Flächen an seitlichen Flächen ausbildet, die sich in Längsrichtung und entlang des Radius erstrecken.

6. Drehmomentsensor nach einem der vorhergehenden Ansprüche, **dadurch gekennzeichnet, dass** die Flächen plan sind.

7. Drehmomentsensor nach einem der vorhergehenden Ansprüche, **dadurch gekennzeichnet, dass** zwei Vorsprünge (18) vorgesehen sind, die gleich ausgestaltet sind und entlang des Umfangs um die Längsachse symmetrisch angeordnet sind.

8. Drehmomentsensor nach einem der vorhergehenden Ansprüche, **dadurch gekennzeichnet, dass** beide Bauteile (13,14) identisch sind.

9. Drehmomentsensor nach einem der vorhergehenden Ansprüche, **dadurch gekennzeichnet, dass** die für die Frequenzmessung benötigte Elektronik (24) auf der Oberfläche der Grundplatte (19) angeordnet ist.

10. Drehmomentsensor nach einem der vorhergehenden Ansprüche, **dadurch gekennzeichnet, dass** die Stromversorgung und die Übertragung der Messsignale der Sensorpaare kabellos sind.

11. Drehmomentsensor nach einem der vorhergehenden Ansprüche, **dadurch gekennzeichnet, dass** auf der vorsprungsfernen Oberfläche der Grundplatte (19) eine WPT-Spule (25) angeordnet ist, die dazu eingerichtet ist, elektrische Energie induktiv von einer mit einem Sensorgehäuse (26) verbundenen Primärspule (27) zu empfangen.

12. Drehmomentsensor nach einem der vorhergehenden Ansprüche, **dadurch gekennzeichnet, dass** auf der Umfangsfläche der Grundplatte (19) Signalkopplungsspulen (28) angeordnet sind, die dazu eingerichtet sind, die Ausgangssignale der Sensorpaare auf eine Sekundärspule (29), die an dem ortsfesten Sensorgehäuse (26) angebracht ist, zu übertragen.

13. Elektromechanische Hilfskraftlenkung für ein Kraftfahrzeug, umfassend eine mit einem Lenkrad (2) verbundene obere Welle (3) und eine mit der oberen Welle (3) über einen Drehstab (15) verbundene untere Welle (30), einen Drehmomentsensor (12) gemäß einem der Ansprüche 1 bis 12 und einen Elektromotor (8) zur Unterstützung einer in das Lenkrad (2) von einem Fahrer eingebrachten Lenkbewegung in Abhängigkeit des von dem Drehmomentsensor (12) gemessenen Drehmomentes.

## Claims

1. A torque sensor (12) for measuring a torque introduced into an upper shaft (3), wherein the upper shaft (3), which can be rotated around a longitudinal axis (100), can be connected to a lower shaft (30) via a torsion rod (12), **characterized in that** the torque sensor (12) has two components intermeshing in the longitudinal direction of the longitudinal axis (100), wherein a first component (13) can be connected to the upper shaft (3) and a second component (14) can be connected to the lower shaft (30), and wherein the components (13,14) have surfaces protruding in the longitudinal direction, wherein the surfaces of one component (13,14) at least partially overlap associated surfaces of the other component (13,14) in the longitudinal direction, and wherein the torque sensor has at least one pair of sensors, wherein a pair of sensors has a sensor coil (23) which can generate a high-frequency alternating magnetic field arranged on one of the surfaces protruding in the longitudinal direction of one component (13,14), and a metallic element (22) arranged on one of the surfaces protruding in the longitudinal direction of the other component (13,14), and wherein a torque introduced into the upper shaft (3) causes a change in the distance between the sensor coil (23) and the metallic element (22), wherein the torque sensor comprises a device which is designed to measure a frequency change of the alternating magnetic field caused by the change in distance and to determine from this the torque introduced into the upper shaft (3).

2. The torque sensor as claimed in claim 1, **characterized in that** each of the two components (13,14) has at least two surfaces, wherein a sensor coil (23) is arranged on a first surface and a metallic element (22) is arranged on a second surface and wherein the sensor coil (23) and the metallic element (22) point away from each other.

3. The torque sensor as claimed in claim 2, **characterized in that** the sensor coil (23) of one component (13,14) and the metallic element (22) of the other component (13,14) and vice versa, are oriented towards each other and are at an immediate distance from each other.

4. The torque sensor as claimed in any one of the previous claims, **characterized in that** the components (13,14) concentrically surround the respective shaft (3,30) and are essentially of cylindrical form.

5. The torque sensor as claimed in any one of the previous claims, **characterized in that** the components (13,14) have a circular base plate (19), from which at least one protrusion (18) protrudes, which extends over a circular sector, and which forms the surfaces on lateral surfaces which extend in the longitudinal direction and along the radius.

6. The torque sensor as claimed in any one of the previous claims, **characterized in that** the surfaces are flat.

7. The torque sensor as claimed in any one of the previous claims, **characterized in that** two protrusions (18) are provided, which are of the same design, and which are arranged along the circumference symmetrically around the longitudinal axis.

8. The torque sensor as claimed in any one of the previous claims, **characterized in that** both components (13,14) are identical.

9. The torque sensor as claimed in any one of the previous claims, **characterized in that** the electronics required for the frequency measurement (24) are arranged on the surface of the base plate (19).

10. The torque sensor as claimed in any one of the previous claims, **characterized in that** the power supply and the transmission of the measurement signals of the sensor pairs are wireless.

11. The torque sensor as claimed in any one of the previous claims, **characterized in that** on the surface of the base plate (19) remote from the protrusion, a WPT coil (25) is arranged which is set up to receive electrical energy inductively from a primary coil (27) connected to a sensor housing (26).

12. The torque sensor as claimed in any one of the previous claims, **characterized in that** on the circumferential surface of the base plate (19), signal coupling coils (28) are arranged which are set up to transmit the output signals of the sensor pairs to a secondary coil (29), which is attached to the stationary sensor housing (26).

13. An electromechanical power steering system for a motor vehicle, comprising an upper shaft (3) connected to a steering wheel (2) and a lower shaft (30) connected to the upper shaft (3) via a torsion rod (15), a torque sensor (12) as claimed in any one of claims 1 to 12 and an electric motor (8) to support a steering movement introduced into the steering wheel (2) by a driver depending on the torque measured by the torque sensor (12).

## Revendications

1. Capteur de couple (12) permettant de mesurer un couple introduit dans un arbre supérieur (3), dans lequel l'arbre supérieur (3) pouvant tourner autour d'un axe longitudinal (100) peut être relié à un arbre inférieur (30) par l'intermédiaire d'une barre de torsion (12),
**caractérisé en ce que** le capteur de couple (12) présente deux composants qui s'engrènent mutuellement dans la direction longitudinale de l'axe longitudinal (100), dans lequel un premier composant (13) peut être relié à l'arbre supérieur (3) et un deuxième composant (14) peut être relié à l'arbre inférieur (30), et dans lequel les composants (13, 14) présentent des surfaces qui dépassent dans la direction longitudinale, dans lequel les surfaces d'un composant (13, 14) se chevauchent au moins partiellement dans la direction longitudinale avec des surfaces associées de l'autre composant (13, 14), et dans lequel le capteur de couple présente au moins une paire de capteurs, dans lequel une paire de capteurs présente une bobine de capteur (23) disposée sur l'une des surfaces qui dépassent dans la direction longitudinale d'un composant (13, 14) et qui peut produire un champ magnétique alternatif à haute fréquence, et un élément métallique (22) disposé sur l'une des surfaces qui dépassent dans la direction longitudinale de l'autre composant (13, 14), et dans lequel un couple introduit dans l'arbre supérieur (3) provoque une modification de la distance entre la bobine de capteur (23) et l'élément métallique (22), dans lequel le capteur de couple comprend un dispositif qui est conçu pour mesurer une modification de fréquence du champ magnétique alternatif, provoquée par la modification de la distance, et pour déterminer à partir de celle-ci le couple introduit dans l'arbre supérieur (3).

2. Capteur de couple selon la revendication 1, **caractérisé en ce que** chacun des deux composants (13, 14) présente au moins deux surfaces, dans lequel une bobine de capteur (23) est disposée sur une première surface et un élément métallique (22) est disposé sur une deuxième surface, dans lequel la bobine de capteur (23) et l'élément métallique (22) sont détournés l'une de l'autre.

3. Capteur de couple selon la revendication 2, **caractérisé en ce que** la bobine de capteur (23) d'un composant (13, 14) et l'élément métallique (22) de l'autre composant (13, 14) et vice versa sont alignés en étant tournés l'une vers l'autre et se trouvent à proximité immédiate.

4. Capteur de couple selon l'une quelconque des revendications précédentes, **caractérisé en ce que** les composants (13, 14) entourent de manière concentrique l'arbre respectif (3, 30) et sont configurés de manière substantiellement cylindrique.

5. Capteur de couple selon l'une quelconque des revendications précédentes, **caractérisé en ce que** les composants (13, 14) présentent une plaque de base circulaire (19) de laquelle dépasse au moins une partie en saillie (18) qui s'étend sur un secteur de cercle et réalise les surfaces sur des surfaces latérales qui s'étendent dans la direction longitudinale et le long du rayon.

6. Capteur de couple selon l'une quelconque des revendications précédentes, **caractérisé en ce que** les surfaces sont planes.

7. Capteur de couple selon l'une quelconque des revendications précédentes, **caractérisé en ce que** deux parties en saillie (18) sont prévues qui sont configurées de manière identique et sont disposées de manière symétrique autour de l'axe longitudinal le long de la circonférence.

8. Capteur de couple selon l'une quelconque des revendications précédentes, **caractérisé en ce que** les deux composants (13, 14) sont identiques.

9. Capteur de couple selon l'une quelconque des revendications précédentes, **caractérisé en ce que** l'électronique (24) nécessaire à la mesure de fréquence est disposée sur la surface supérieure de la plaque de base (19).

10. Capteur de couple selon l'une quelconque des revendications précédentes, **caractérisé en ce que** l'alimentation électrique et la transmission des signaux de mesure des paires de capteurs sont effectués sans fil.

11. Capteur de couple selon l'une quelconque des revendications précédentes, **caractérisé en ce que** sur la surface supérieure éloignée de la partie en saillie de la plaque de base (19) est disposée une bobine WPT (25) qui est conçue pour recevoir par induction de l'énergie électrique d'une bobine primaire (27) reliée à un boîtier de capteur (26).

12. Capteur de couple selon l'une quelconque des revendications précédentes, **caractérisé en ce que** sur la surface circonférentielle de la plaque de base (19) sont disposées des bobines de couplage de signal (28) qui sont conçues pour transmettre les signaux de sortie des paires de capteurs à une bobine secondaire (29) qui est installée sur le boîtier de capteur stationnaire (26) .

13. Direction assistée électromécanique pour un véhicule automobile comprenant un arbre supérieur (3) relié à un volant (2) et un arbre inférieur (30) relié à l'arbre supérieur (3) par l'intermédiaire d'une barre de torsion (15), un capteur de couple (12) selon l'une quelconque des revendications 1 à 12, et un moteur électrique (8) pour assister un mouvement de direction introduit dans le volant (2) par un conducteur en fonction du couple mesuré par le capteur de couple (12) .
